**Europäisches Patentamt**

**European Patent Office**

**Office européen des brevets**

(11) Veröffentlichungsnummer: **0 151 464**
**B1**

(12) **EUROPÄISCHE PATENTSCHRIFT**

(45) Veröffentlichungstag der Patentschrift:
**28.12.88**

(21) Anmeldenummer: **85100962.1**

(22) Anmeldetag: **31.01.85**

(51) Int. Cl.⁴: **F 16 F 15/12**

(54) **An einer Welle befestigbarer Tragring aus Kunststoff für einen Drehschwingungsdämpfer.**

(30) Priorität: **03.02.84 DE 3403858**

(43) Veröffentlichungstag der Anmeldung:
**14.08.85 Patentblatt 85/33**

(45) Bekanntmachung des Hinweises auf die Patenterteilung:
**28.12.88 Patentblatt 88/52**

(84) Benannte Vertragsstaaten:
**DE FR GB**

(56) Entgegenhaltungen:
**DE-U- 7 901 384**
**FR-A- 2 543 236**
**GB-A- 2 084 290**
**US-A- 3 422 637**

**PLASTICS ENGINEERING, Band 36, Nr. 10, Oktober 1980, Seiten 19-22, Manchester, New Hampshire, US; F. STRASSER: "Molding metal inserts into plastic parts"**

(73) Patentinhaber: **METZELER Gesellschaft mit beschränkter Haftung, Gneisenaustrasse 15, D-8000 München 50 (DE)**

(72) Erfinder: **Hundt, Werner, Friedrich Engelsbogen 5, D-8000 München 83 (DE)**
Erfinder: **Wagner, Bernd, Juchaczstrasse 56, D-5410 Höhr-Grenzhausen (DE)**

(74) Vertreter: **Michelis, Theodor, Dipl.-Ing., Gneisenaustrasse 15, D-8000 München 50 (DE)**

**Beschreibung**

Die Erfindung bezieht sich auf einen an einer Welle befestigbaren Tragring aus Kunststoff für einen Drehschwingungsdämpfer, insbesondere für einen Kolbenmotor, mit Öffnungen für die Aufnahme von Befestigungselementen sowie mit mehreren im Tragring angeordneten Metallbuchsen, deren Stirnflächen mit den Seitenflächen des Tragringes fluchten.

Ein derartiger Tragring ist aus der US-A-3 422 637 bekannt. Die hierbei in die Öffnungen des Tragringes eingesetzten Metallbuchsen dienen im wesentlichen allein dazu, Druckkräfte in axialer Richtung beim Anschrauben aufzunehmen, um eine Verformung der die Buchsen umgebenden Kunststoff-Materialbereiche zu verhindern.

Drehschwingungsdämpfer, die im allgemeinen Drehschwingungen der Kurbelwelle eines Kolbenmotors dämpfen sollen, sind aber zusätzlich hohen tangentialen Beschleunigungskräften und axialen Schwingungen ausgesetzt, die sich je nach Betriebszustand, beispielsweise Kaltlauf, Warmlauf, niedrige Drehzahlen, hohe Drehzahlen, stark ändern können, wodurch es zu erheblichen zusätzlichen Beanspruchungen kommt.

Der vorliegenden Erfindung liegt daher die Aufgabe zugrunde, einen Tragring zu schaffen, der auch stärkeren Beanspruchungen in Form von axialen Biegungen und tangentialen Beschleunigungen gewachsen ist und damit eine hohe Dauerstandfestigkeit aufweist.

Zur Lösung dieser Aufgabe ist erfindungsgemäss vorgesehen, dass die Metallbuchsen beim Spritzen des Tragringes in diesen eingegossen sind und dass von den Metallbuchsen in der Ebene des Tragringes liegende, flächige Formschlusselemente ausgehen, die eine von der Kreisform abweichende Umfangskontur aufweisen.

Derartige flächige Formschlusselemente, die mit den Buchsen in den Tragring eingegossen sind, wirken als Versteifungselemente gegenüber axialen Bewegungen bzw. Biegungen der äusseren Umfangsbereiche der Kunststoffdämpferscheibe. Durch die Vermeidung einer glatten Umfangskante dieser Versteifungselemente wird damit auch eine Bruchlinie konstanten Radius bei axialen Schwingungen vermieden.

Die Formschlusselemente können dabei die Form von Metallwinkeln mit unter angenähert 90° zueinander und von der Metallbuchse angenähert radial nach aussen verlaufenden Schenkeln aufweisen.

Es ist aber auch möglich, dass die Formschlusselemente aus flachen, entlang der Umfangslinie der Metallbuchsen verlaufenden Ringscheiben bestehen, die eine wellenförmige Aussenkontur aufweisen und in die die Metallbuchsen eingesetzt sind.

Zusätzlich können diese Ringscheiben auch am Innenumfang Wellenform aufweisen.

Zweckmässigerweise sind die Ringscheiben in ihrer Breite derart wellenförmig ausgebildet, dass im Bereich der Metallbuchsen jeweils ein Wellental verläuft.

Die Formschlusselemente selbst können mit zusätzlichen Durchbrüchen versehen sein, um eine bessere Verankerung im Kunststoffmaterial zu gewährleisten.

Anhand einer schematischen Zeichnung sind Aufbau und Funktionsweise von Ausführungsbeispielen nach der Erfindung näher erläutert. Dabei zeigen:

Fig.1–3 eine Aufsicht bzw. einen Teilschnitt durch drei verschiedene Ausführungsformen eines Tragrings und

Fig. 4 einen Schnitt durch einen komplettierten Drehschwingungsdämpfer.

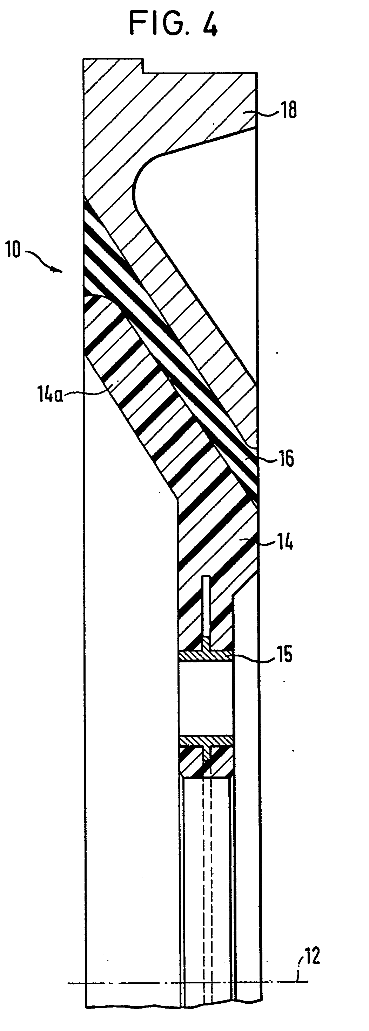

Wie man zunächst aus dem Schnitt nach Fig. 4 durch einen komplettierten Drehschwingungsdämpfer 10 ersieht, besteht ein solcher Dämpfer aus einem radial innenliegenden Tragring 14 aus verstärktem Kunststoff, insbesondere Polyester oder Polyamid, der beispielsweise auf eine nur mit ihrer Mittellinie 12 dargestellten Kurbelwelle aufgesetzt ist. Der Tragring 14 weist radial aussenliegend einen schräg geneigten Flansch 14a auf, an den über eine Schicht 16 aus elastomerem Material der eigentliche Schwungring 18 anvulkanisiert ist.

Zur Befestigung des Tragrings 14 an einer entsprechenden Nabe der Kurbelwelle 12 sind in den Tragring 14 eingegossene Buchsen 15 vorgesehen, deren Stirnflächen mit den Stirnflächen des Tragringes 14 fluchten. Wird nun ein Befestigungsbolzen durch die Bohrung der Buchse 15 hindurchgesteckt und durch Schrauben fixiert, so liegen diese Schrauben an den Stirnflächen der Buchsen 15 an, so dass dadurch das Kunststoffmaterial des Tragringes 14 nicht direkt beeinflusst wird.

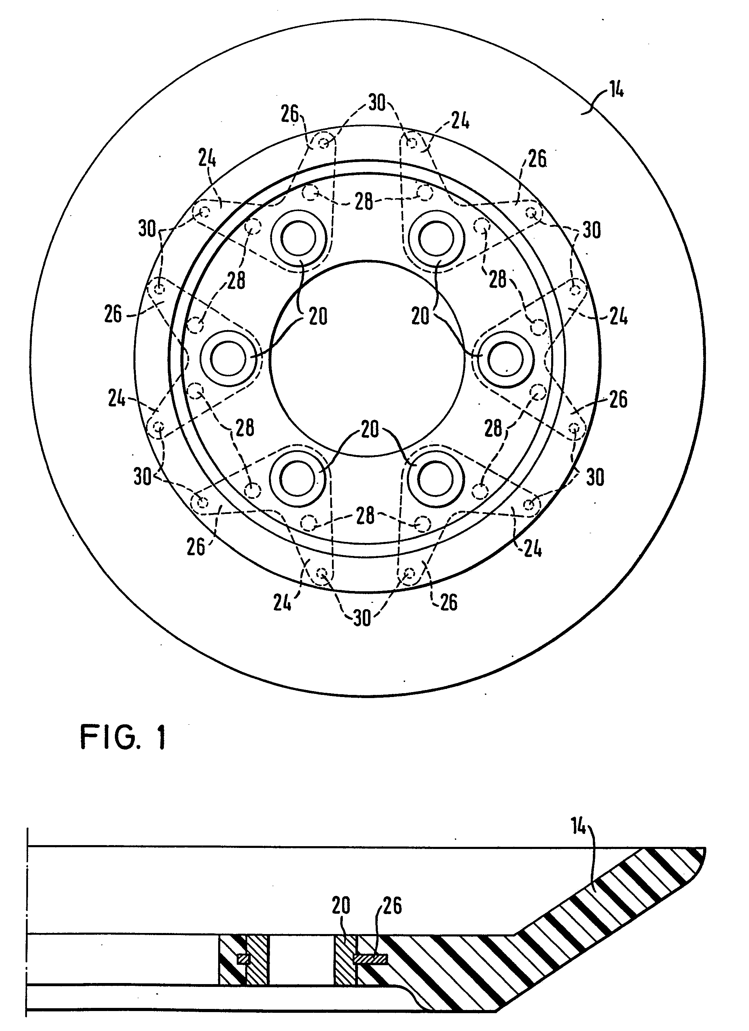

Fig. 1 zeigt eine erste Ausführungsform eines Tragringes 14 mit eingesetzten Buchsen. Dabei sind insgesamt 6 in gleichmässigen Abständen voneinander angeordnete zylindrische Buchsen 20 vorgesehen, die jeweils einzelne, radial nach aussen vorstehende, flügelförmige Ansätze 24 und 26 aufweisen. Diese Ansätze sind mit zusätzlichen Öffnungen 28 versehen, die von dem Kunststoffmaterial des Tragringes durchdrungen sind.

Somit ergibt sich also eine grosse Kontaktfläche zwischen Buchsen 20 und flügelförmigen Ansätzen 24 und 26 einerseits, sowie dem Kunststoffmaterial des Tragringes 14 andererseits, so dass auch starke Schwingungen und Stösse problemlos aufgenommen und übertragen werden.Durch die radial nach aussen gerichtete Anordnung der flügelförmigen Ansätze 24 und 26 wird darüber hinaus noch erreicht, dass beim Einspritzen des Kunststoffes in die Tragringform die Strömung des flüssigen Materials nicht behindert wird, da der flüssige Kunststoff im allgemeinen von der Mitte her nach aussen strömend in die Form eingespritzt wird.

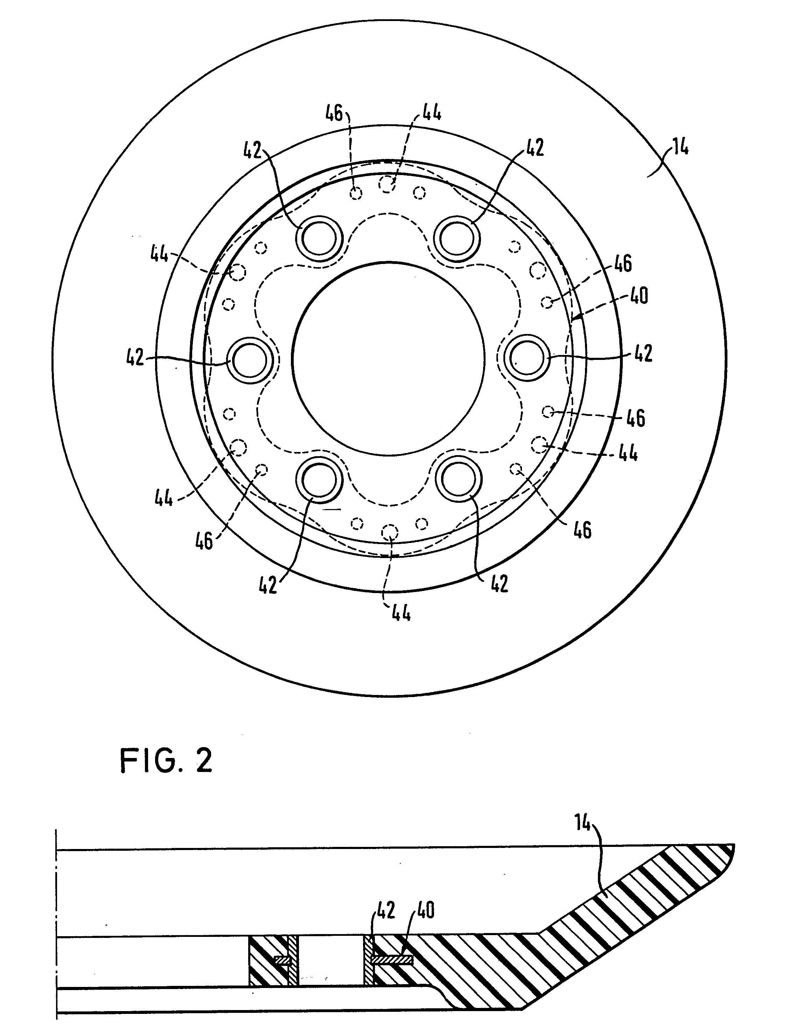

Bei der in Fig. 2 dargestellten Ausführungsform erfolgt eine zusätzliche Festlegung der Metallbuchsen 42 durch einen im Tragring eingebetteten Metallring 40, der eine wellenförmige Aussen-und Innenkontur aufweist. Durch diese wellenförmige Ausbildung der Aussen- und Innenkontur der Ringscheibe 40 wird eine glatte Umfangskante konstanten Radius vermieden, die als Bruchlinie bei axialen Schwingungen fungieren könnte. Durch unterschiedlich weite radiale Erstreckung einzelner Bereiche der Ringscheibe 40 wird vielmehr eine solche glatte Sollbruchkante vermieden, wodurch eine erheblich höhere Daurstandfestigkeit des Tragringes gegeben ist.

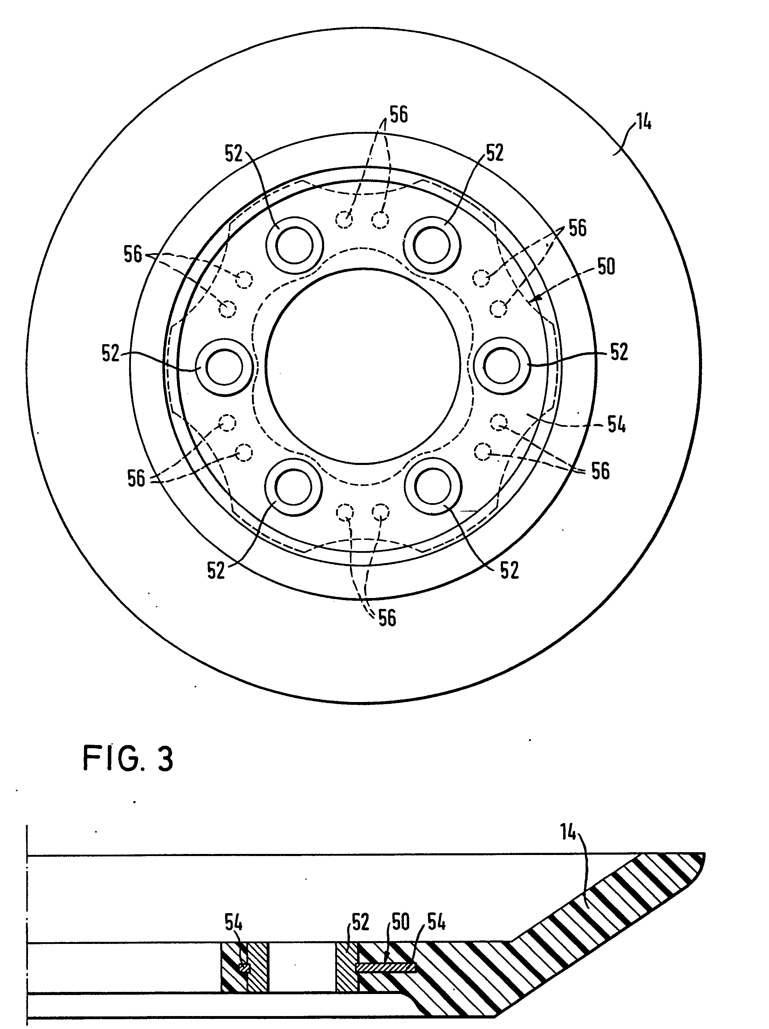

Eine ähnliche Ausgestaltung ist in Fig. 3 gezeigt, bei der die Buchsen 52 in eine Ringscheibe 54 eingesetzt sind, die an ihrer Innenseite die Form einer flachen Welle aufweist und an ihrer Aussenseite mit abgeflachten Vorsprüngen versehen ist und zwar an den Stellen, an denen sich die Buchsen 52 befinden. Auch hierdurch ist eine bessere Verankerung im Kunststoffmaterial des Tragringes 14 gegeben und eine glatte Bruchkante sicher vermieden.

Zusätzliche Öffnungen 44 und 46 bzw. 56 in den Ringscheiben nach den Fig. 2 und 3 bewirken eine zusätzliche Durchdringung mit dem Material des Tragringes 14 und damit eine zusätzliche Verankerung.

## Patentansprüche

1. An einer Welle befestigbarer Tragring (14) aus Kunststoff für einen Drehschwingungsdämpfer, insbesondere für einen Kolbenmotor, mit Öffnungen für die Aufnahme von Befestigungselementen sowie mit mehreren, im Tragring (14) angeordneten Metallbuchsen (20, 42, 52), deren Stirnflächen mit den Seitenflächen des Tragringes (14) fluchten, dadurch gekennzeichnet, dass die Metallbuchsen (10, 42, 52) beim Spritzen des Tragringes (14) in diesen eingegossen sind und dass von den Metallbuchsen (20, 42, 52) in der Ebene des Tragringes (14) liegende, flächige Formschlusselemente (24, 26; 40, 50) ausgehen, die eine von der Kreisform abweichende Umfangskontur aufweisen.

2. Tragring nach Anspruch 1, dadurch gekennzeichnet, dass die Formschlusselemente die Form von Metallwinkeln mit unter angenähert 90° zueinander und von der Metallbuchse (20) angenähert radial nach aussen verlaufenden Schenkeln (24, 26) aufweisen.

3. Tragring nach Anspruch 1, dadurch gekennzeichnet, dass die Formschlusselemente aus flachen, entlang der Umfangslinie der Metallbuchsen (42, 52) verlaufenden Ringscheiben (40, 50) bestehen, die eine wellenförmige Aussenkontur aufweisen und in die die Metallbuchsen (42, 52) eingesetzt sind.

4. Tragring nach Anspruch 3, dadurch gekennzeichnet, dass die Ringscheiben (40, 50) auch am Innenumfang Wellenform aufweisen.

5. Tragring nach Anspruch 3 und 4, dadurch gekennzeichnet, dass die Ringscheiben (40, 50) in ihrer Breite derart wellenförmig ausgebildet sind, dass im Bereich der Metallbuchsen (42, 52) jeweils ein Wellenteil verläuft.

6. Tragring nach Anspruch 1 bis 5, dadurch gekennzeichnet, dass die Formschlusselemente (24, 26; 40, 50) mit zusätzlichen Durchbrüchen (28, 30, 44, 46, 56) versehen sind.

## Claims

1. Supporting ring (14) of plastic designed to be fixed to a shaft and used for a torsional vibration damper, in particular for a piston engine, having openings for receiving fastening elements and a plurality of metal sleeves (20, 42, 52) arranged in the supporting ring (14), the end faces of which metal sleeves are flush with the lateral surfaces of the supporting ring (14), characterised in that the metal sleeves (20, 42, 52) are incorporated in the supporting ring (14) in the process of injection moulding of the ring (14) and in that flat form locking elements (24, 26; 40, 50) extend from the metal sleeves (20, 42, 52) in the plane of the supporting ring (14), which form-locking elements have a circumferential contour deviating from the circular.

2. Supporting ring according to claim 1, characterised in that the form-locking elements have the form of metal angle pieces the arms (24, 26) of which are set at an angle of approximately 90° to one another and extend approximately radially outwards from the metal sleeve (20).

3. Supporting ring according to claim 1, characterised in that the form locking elements consist of flat annular discs (40, 50) into which the metal sleeves (42, 52) are inserted and which extend along the circumferential line of the metal sleeves (42, 52) and have an undulating external contour.

4. Supporting ring according to claim 3, characterised in that the annular discs (40, 50) have an undulating form also on their internal circumference.

5. Supporting ring according to claims 3 and 4, characterised in that, viewed in the direction of their width, the annular discs (40, 50) have an undulating form such that a portion of a wave extends in the region of each metal sleeve (42, 52).

6. Supporting ring according to claims 1 to 5, characterised in that the form locking elements (24, 26; 40, 50) have additional perforations (28, 30, 44, 46, 56).

## Revendications

1. Anneau de support (14) en matière plastique pouvant être fixé sur un arbre et prévu pour un amortisseur d'oscillations de rotation, notamment pour un moteur à pistons, comportant des ouvertures servant à loger des organes de fixation, ainsi que plusieurs douilles métalliques (20, 42, 52), qui sont disposées dans l'anneau de support (14) et dont les surfaces frontales sont de niveau avec les surfaces latérales de l'anneau de support (14), caractérisé par le fait que les douilles métalliques (20, 42, 52) sont scellées dans l'anneau de support (14) lors du moulage par injection de ce dernier et que des éléments d'engagement positif (24, 26; 40, 50) possédant une certaine étendue, situés dans le plan de l'anneau de support (14) et possédant un contour périphérique différent de la forme circulaire s'étendent à partir des douilles métalliques (20, 42, 52).

2. Anneau de support suivant la revendication 1, caractérisé par le fait que les éléments d'engagement positif possèdent la forme d'equerres métalliques possédant des branches (24, 26) faisant entre elles un angle d'environ 90° et s'étendent approximativement radialement vers l'extérieur à partir de la douille métallique (20).

3. Anneau de support suivant la revendication 1, caractérisé par le fait que les éléments d'engagement positif sont constitués par des disques annulaires plats (40, 50), qui s'étendent le long de la ligne de contour des douilles métalliques (42, 52) et possèdent un contour extérieur de forme ondulée et dans lesquelles les douilles métalliques (42, 52) sont insérées.

4. Anneau de support suivant la revendication 3, caractérisé par le fait que les disques annulaires (40, 50) présentent également une forme ondulée au niveau de leur pourtour intérieur.

5. Anneau de support suivant les revendications 3 et 4, caractérisé par le fait que les disques annulaires (40, 50) sont réalisés avec une forme ondulée dans leur étendue en largeur de sorte qu'une partie ondulée s'étend respectivement dans la zone des douilles métalliques (42, 52).

6. Anneau de support suivant les revendications 1 à 5, caractérisé par le fait que les éléments d'engagement positif (24, 26; 40, 50) comportent des perçages supplémentaires (28, 30, 44, 46, 56).

FIG. 1

FIG. 2

FIG. 3

# FIG. 4